# FASCICULE DE BREVET EUROPEEN

(11) **EP 3 173 603 B1**
(45) Date de publication et mention de la délivrance du brevet: **20.06.2018**
(21) Numéro de dépôt: 16200388.3
(22) Date de dépôt: 24.11.2016
(51) Int. Cl.: F02C 9/44, B64D 31/06

(54) **PROCÉDÉ DE CONTRÔLE DE LA POUSSÉE DES RÉACTEURS D'UN AVION PENDANT LA PHASE DE DÉCOLLAGE, DISPOSITIF DE CONTRÔLE ET AVION CORRESPONDANT**
VERFAHREN ZUR STEUERUNG DES TRIEBWERKSCHUBS EINES FLUGZEUGS WÄHREND DER STARTPHASE, STEUERUNGSVORRICHTUNG UND ENTSPRECHENDES FLUGZEUG
METHOD FOR CONTROLLING THE THRUST OF THE JET ENGINES OF AN AIRCRAFT DURING THE TAKE-OFF PHASE, CONTROLLING DEVICE AND CORRESPONDING AIRCRAFT

(30) Priorité: 27.11.2015 FR 1561488
(43) Date de publication de la demande: 31.05.2017
(73) Titulaire: AIRBUS OPERATIONS (S.A.S), 31060 Toulouse (FR); Airbus (S.A.S.), 31700 Blagnac (FR)
(72) Inventeur: CONSOLA, Cédric, 31200 TOULOUSE (FR); BLUSSON, Olivier, 31100 TOULOUSE (FR); SABATHIER, Jean-Philippe, 31150 BRUGUIERES (FR)
(74) Mandataire: Gicquel, Olivier Yves Gérard

(56) Documents cités:
- WO-A1-2012/148398
- US-A1- 2011 184 623

## Description

### DOMAINE DE L'INVENTION

La présente invention se rapporte à un procédé de contrôle de la poussée des réacteurs d'un avion permettant d'optimiser la performance de l'avion au décollage, à un dispositif de contrôle permettant la mise en oeuvre de ce procédé, et à un avion comprenant un tel dispositif de contrôle.

### ART ANTERIEUR

Pour décoller, un avion commercial multi-réacteurs accélère, en roulant au sol, depuis une position arrêtée jusqu'à décoller du sol.

Au cours de cette accélération, l'avion atteint d'abord sa vitesse minimum de contrôle au sol V_{MCG}, qui est la vitesse minimum nécessaire pour que l'avion reste latéralement contrôlable par le pilote, en cas de panne de l'un de ses réacteurs. En continuant son accélération, l'avion atteint sa vitesse de décision, ou vitesse critique V₁, en dessous de laquelle le pilote peut décider d'interrompre le décollage, et au-dessus de laquelle il est obligé de poursuivre le décollage. Cette vitesse critique V₁ est obligatoirement supérieure à la vitesse minimum de contrôle au sol V_{MCG} mais elle peut être, dans certains cas, très proche de celle-ci. Pour éviter une sortie de piste en cas d'interruption du décollage, l'avion doit être capable d'accélérer jusqu'à sa vitesse critique V₁, puis de freiner jusqu'à l'arrêt complet, en parcourant une distance, désignée par l'expression anglaise « Accelerate-Stop Distance » ou par l'acronyme « ASD », qui doit être inférieure à la longueur de la piste disponible. Cette longueur de piste disponible est parfois désignée par l'expression anglaise « Accelerate-Stop Distance Available » ou par l'acronyme « ASDA ». Elle peut dans certains cas être supérieure à la longueur de la piste elle-même, quand la piste est suivie d'un prolongement sur lequel l'avion peut rouler dans des conditions exceptionnelles.

En poursuivant son accélération après avoir dépassé la vitesse critique V₁, l'avion atteint sa vitesse de rotation V_{R}. Quand l'avion atteint cette vitesse, le pilote agit sur les gouvernes pour faire décoller l'avion.

La vitesse minimum de contrôle au sol V_{MCG}, la vitesse critique V₁ et la vitesse de rotation V_{R} sont déterminées, conformément aux exigences réglementaires, en fonction de mesures effectuées lors d'essais de l'avion et de paramètres tels que la masse maximum de l'avion au décollage (souvent désignée par l'expression anglaise « Maximum Take Off Weight » ou par l'acronyme « MTOW »), la puissance de poussée des réacteurs de l'avion, la longueur de la piste de décollage et les conditions atmosphériques du jour (température, pression).

Quand la piste de décollage est relativement courte, la distance ASD doit être réduite, par rapport à la distance ASD utilisée sur une piste longue, afin de rester inférieure à la longueur de piste disponible. Cette réduction de la distance ASD peut être obtenue en diminuant la masse maximum de l'avion au décollage MTOW ou en diminuant la vitesse critique V₁.

La diminution de la masse maximum au décollage MTOW nécessite de réduire la quantité de carburant ou de réduire la masse utile transportée. Cette diminution affecte la rentabilité du vol et est donc évitée autant que possible. On cherche au contraire, en général, à augmenter cette masse

La diminution de la vitesse critique V₁ nécessite souvent, quand la piste de décollage est courte, de réduire la vitesse minimum de contrôle au sol V_{MCG}. Cette diminution peut être obtenue en réduisant le niveau de la poussée des réacteurs. En effet, avec une valeur de poussée réduite (appelée par l'expression anglaise « derate thrust »), la vitesse minimum de contrôle au sol V_{MCG} est réduite, et l'avion est plus facilement contrôlable en cas de panne de l'un de ses réacteurs. Le levier de commande de poussée des réacteurs d'un avion comprend ainsi une commande permettant de réduire la poussée, selon un taux de réduction souhaité.

Sur certaines pistes de décollage de faible longueur, la masse maximum au décollage MTOW peut donc être plus importante avec une poussée réduite des réacteurs qu'avec la poussée nominale des réacteurs. Cependant, il reste des configurations, sur des pistes de décollage de faible longueur, dans lesquelles l'utilisation de la poussée réduite des réacteurs n'est pas suffisante pour éviter des limitations de la masse maximum au décollage MTOW, et donc de la performance de l'avion au décollage.

Le document US 2011/0184623 A1 divulgue un procédé de contrôle de la poussée des réacteurs d'un avion multi-réacteurs, pour faciliter le décollage de l'avion d'une piste courte sans limitant la masse maximum de décollage (MTOW). Avec une réduction du poussée des réacteurs, une réduction de la vitesse critique (V₁) et une réduction de la vitesse minimale de contrôle au sol (V_{MCG}) sont obtenues. On peut donc réduire la distance nommée "Accelerate-Stop-Distance", ce qui conduit à une réduction de la longueur nécessaire de la piste disponible.

### OBJECTIFS DE L'INVENTION

La description ci-après présente un procédé de contrôle, et un dispositif permettant de le mettre en oeuvre, qui remédient à au moins certains des inconvénients de l'art antérieur.

En particulier, ce procédé a pour objectif de permettre une augmentation de la masse maximale au décollage d'un avion commercial, lorsque la longueur trop faible de la piste de décollage limite cette masse.

### EXPOSE DE L'INVENTION

Ces objectifs, ainsi que d'autres qui apparaitront plus clairement par la suite, sont atteints à l'aide d'un procédé de contrôle de la poussée des réacteurs d'un avion multi-réacteurs, pendant la phase de décollage de l'avion, qui se caractérise en ce qu'il comprend les étapes successives suivantes :
- une première étape de commande des réacteurs à un premier niveau de poussée P1, jusqu'à ce que l'avion atteigne une première vitesse prédéterminée V_{A} ;
- une seconde étape de commande des réacteurs à un second niveau de poussée P2, inférieur au premier niveau de poussée P1, quand l'avion présente une vitesse supérieure à la première vitesse prédéterminée V_{A};

la première vitesse prédéterminée V_{A} étant choisie inférieure à la vitesse minimale de contrôle au sol V_{MCG} dudit avion quand les réacteurs sont au second niveau de poussée P2.

Selon un mode de réalisation préférentiel, le procédé de contrôle comprend une troisième étape de commande des réacteurs à un troisième niveau de poussée P3, supérieur au second niveau de poussée P2, quand l'avion présente une vitesse supérieure à une seconde vitesse prédéterminée V_{B}, ladite seconde vitesse prédéterminée V_{B} étant choisie supérieure à la vitesse minimale de contrôle au sol V_{MCG} dudit avion quand les réacteurs sont au troisième niveau de poussée P3.

Avantageusement, le troisième niveau de poussée P3 est égal audit premier niveau de poussée P1.

De préférence, le premier niveau de poussée P1 est égal au niveau de poussée maximal pouvant être obtenu par le pilote.

Préférentiellement, le second niveau de poussée P2 est compris entre 80% et 95% du premier niveau de poussée P1.

La présente invention concerne également un dispositif de contrôle de la poussée des réacteurs d'un avion multi-réacteurs, pendant la phase de décollage de l'avion, comprenant un calculateur embarqué dans l'avion et apte à commander le niveau de poussée des réacteurs de l'avion, qui se caractérise en ce qu'il comprend un programme informatique, mis en oeuvre par ledit calculateur, et apte à commander le niveau de poussée des réacteurs de l'avion selon le procédé décrit ci-dessus.

La présente invention concerne également un avion multi-réacteurs, comprenant un dispositif tel que décrit ci-dessus.

### LISTE DES FIGURES

D'autres caractéristiques et avantages ressortiront de la description qui va suivre de l'invention, description donnée à titre d'exemple uniquement, en regard des dessins annexés parmi lesquels :
- la figure 1 est une représentation schématique d'un avion subissant une panne d'un réacteur, lors de son accélération pour le décollage ;
- la figure 2 est une représentation schématique d'un avion accélérant sur une piste de décollage et des vitesses associées, pour deux niveaux de poussée des réacteurs ;
- la figure 3 est une représentation schématique d'un avion accélérant sur une piste de décollage et des vitesses associées, lors de la mise en oeuvre d'un procédé de contrôle de la poussée des réacteurs selon un mode de réalisation de l'invention ;
- la figure 4 est un graphique illustrant, pour un avion donné, la masse maximale au décollage en fonction de la longueur de piste disponible, pour plusieurs configurations ;
- la figure 5 représente schématiquement le niveau de poussée des réacteurs en fonction de la vitesse de l'avion, lors de la mise en oeuvre du procédé de contrôle illustré par la figure 3 ;
- la figure 6 représente schématiquement les étapes du procédé de contrôle de la poussée des réacteurs illustré par la figure 3.

### DESCRIPTION DETAILLEE DE MODES DE REALISATION

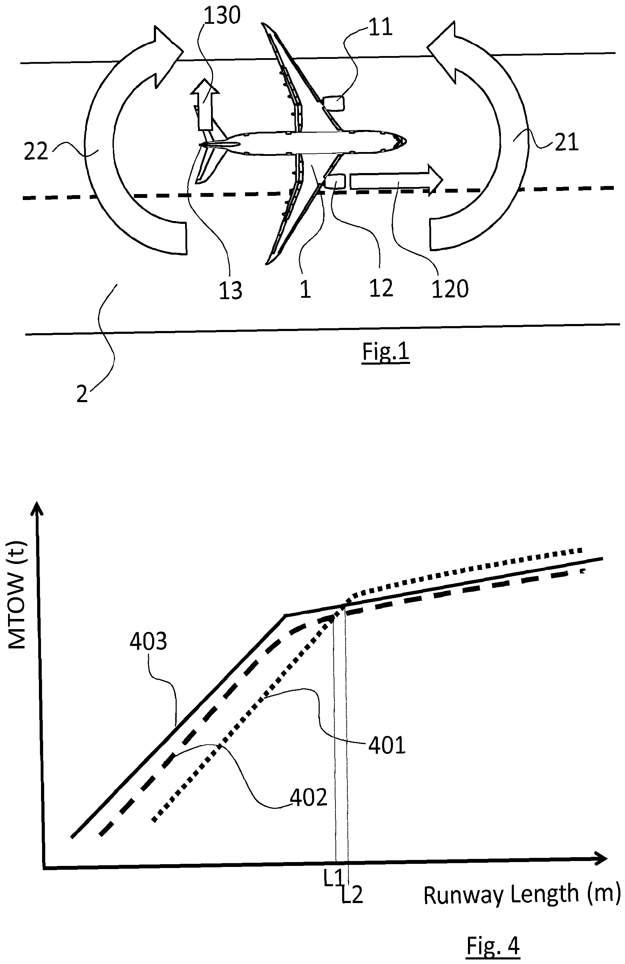

La figure 1 représente schématiquement un avion 1 équipé de deux réacteurs 11 et 12 et roulant sur une piste 2, quand son réacteur 11 s'arrête inopinément. La poussée du réacteur 12, représentée par la flèche 120, engendre un moment M1 qui tend alors à faire pivoter l'avion comme le représente la flèche 21, et donc à le faire dévier de la piste 2. Le pilote compense alors cette rotation en agissant sur la gouverne de direction 13 de l'avion afin de générer une force représentée par la flèche 130, qui engendre un moment M2 tendant à faire pivoter l'avion comme le représente la flèche 22. La dérive engendrée par la gouverne de direction 13 est fonction de la vitesse de déplacement de l'avion 1.

Le mouvement latéral de l'avion peut alors être contrôlé par le pilote uniquement si le moment M2 est au moins égal au moment M1, ce qui implique que la vitesse de déplacement de l'avion 1 soit supérieure à une vitesse minimale de contrôle au sol, notée V_{MCG}, qui est déterminé notamment en fonction de résultats d'essais de l'avion, et de la poussée de chaque réacteur 11 et 12.

En effet, quand le réacteur 12, fonctionnant lors de la panne du réacteur 11, exerce une poussée plus faible, cette poussée engendre un moment M1' plus faible. La vitesse minimale de contrôle au sol V_{MCG} nécessaire pour que la dérive engendre un moment compensant ce moment M1' est alors plus faible.

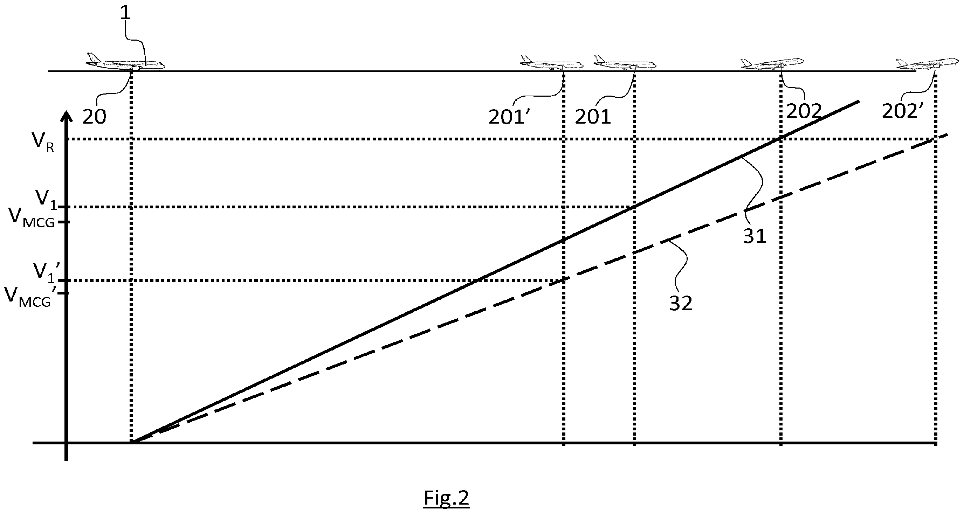

La figure 2 représente schématiquement l'avion 1 en plusieurs positions sur la piste de décollage 2, et les vitesses de cet avion au cours de sa progression sur la piste, quand ses deux réacteurs fonctionnent normalement. La distance parcourue par l'avion 1 sur la piste de décollage est représentée en abscisse, et sa vitesse est représentée en ordonnée. Dans la position 20, l'avion 1 est immobile. Il accélère par la suite, grâce à la poussée de ses réacteurs.

Quand la poussée de ses réacteurs est la poussée nominale (usuellement désignée par l'expression anglaise « Take Off / Go Around » ou par l'acronyme TO/GA), la vitesse de l'avion augmente, au fur et à mesure de son déplacement, selon la courbe 31. Elle atteint la vitesse critique V₁, obligatoirement supérieure à la vitesse minimale de contrôle au sol V_{MCG}, quand l'avion est dans la position 201, puis atteint la vitesse de rotation V_{R}, à laquelle le pilote fait décoller l'avion, quand l'avion atteint la position 202.

Quand la poussée des réacteurs est réduite par rapport à la poussée nominale, la vitesse de l'avion augmente, au fur et à mesure de son déplacement, selon la courbe 32. Du fait de la poussée plus faible des réacteurs, la vitesse minimum de contrôle au sol est réduite à la valeur notée V_{MCG}', ce qui permet de réduire la vitesse critique à la valeur notée V₁, inférieure à V₁. L'avion atteint cette vitesse critique V₁, quand l'avion est dans la position 201', puis atteint la vitesse de rotation V_{R} quand l'avion atteint la position 202'. La distance de piste parcourue pour atteindre la vitesse critique étant inférieure quand la poussée est réduite, la distance ASD est réduite. Dans le cas où cette distance ASD conditionne la longueur de piste nécessaire, la longueur de la piste de décollage peut être réduite. Sur une piste courte, nécessitant de réduire la distance ASD, l'utilisation d'une poussée réduite permet donc d'augmenter la masse maximum au décollage MTOW.

La figure 4 représente des courbes illustrant cette augmentation, pour des conditions données, notamment d'altitude et de température, et pour un avion donné. Le graphique de cette figure montre, en abscisse, la longueur de piste disponible, notée par l'expression anglaise « Runway Length » et exprimée an mètres, et en ordonnée la masse maximale au décollage, notée MTOW et exprimée en tonnes. La courbe 401 représente la masse maximum au décollage MTOW d'un avion commercial, en fonction de la longueur de la piste de décollage, quand la poussée des réacteurs est nominale (TO/GA). La courbe 402 représente la masse maximum au décollage MTOW de cet avion, en fonction de la longueur de piste, quand la poussée des réacteurs est réduite par rapport à la poussée nominale.

Selon ces courbes, quand la longueur de piste est inférieure à une longueur L1, la masse maximum au décollage MTOW est plus grande avec la poussée réduite qu'avec la poussée nominale. En revanche, pour une longueur de piste plus grande, la masse maximale au décollage est supérieure avec la poussée nominale. En effet, pour une piste courte, la masse maximum au décollage MTOW est limitée principalement par des contraintes liées à la vitesse minimale de contrôle au sol V_{MCG}. Pour une piste plus longue, la masse maximum au décollage MTOW est limitée par d'autres facteurs, et la diminution de la vitesse minimale de contrôle V_{MCG} ne permet pas de l'augmenter.

Pour optimiser la masse maximum de l'avion au décollage MTOW, il est prévu, selon un mode de réalisation de l'invention, de contrôler la poussée des réacteurs selon un procédé qui modifie le niveau de poussée au cours de la phase d'accélération de l'avion pour le décollage.

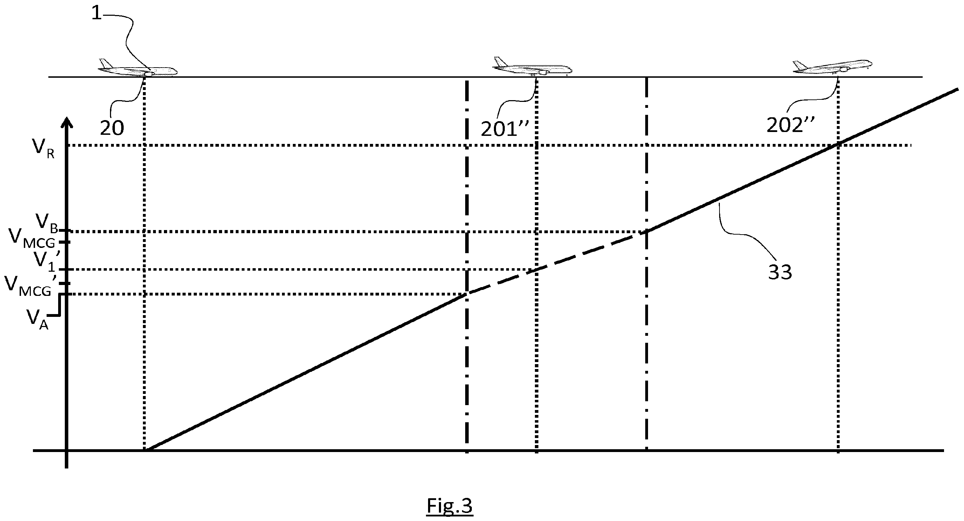

La figure 3 représente schématiquement l'avion 1, équipé d'un dispositif de contrôle de la poussée permettant la mise en oeuvre de ce procédé, en plusieurs positions sur la piste de décollage 2, et les vitesses de cet avion au cours de sa progression sur la piste. La distance parcourue par l'avion sur la piste de décollage est représentée en abscisse, et sa vitesse est représentée en ordonnée. Dans la position 20, l'avion 1 est immobile. Il accélère par la suite, grâce à la poussée de ses réacteurs.

Au début de l'accélération, le dispositif de contrôle maintient la poussée des réacteurs à un niveau élevé P1, de préférence à la poussée nominale TO/GA. La vitesse de l'avion augmente, selon la courbe 33, jusqu'à atteindre une vitesse V_{A}. Quand l'avion atteint cette vitesse, le dispositif de contrôle de poussée diminue la poussée à un niveau réduit P2, inférieur au niveau P1.

Une vitesse minimale de contrôle au sol V_{MCG}' est associée au niveau de poussée P2. P2 étant inférieur à P1, cette vitesse V_{MCG}' est inférieure à la vitesse minimale de contrôle au sol V_{MCG} associée au niveau de poussée P1. La vitesse V_{A} est, selon l'invention, choisie inférieure à la vitesse V_{MCG}' associée au niveau de poussée P2. Plus précisément, la vitesse V_{A} est choisie de telle manière que le niveau de poussée des réacteurs soit égal à P₂ avant que l'avion ait atteint la vitesse V_{MCG}', ou au même moment. Ainsi, la poussée P1 (en pratique, la poussée nominale TO/GA) est utilisée au début de l'accélération de l'avion, afin que cette accélération soit plus forte. A l'approche de la vitesse minimale de contrôle au sol de l'avion, la poussée diminue, afin de diminuer la valeur de la vitesse minimale de contrôle au sol. L'avion atteint donc sa vitesse minimale de contrôle au sol sur une distance plus courte que dans l'art antérieur, dans la mesure où son accélération peut être maximale sur la quasi-totalité de cette distance, et que la vitesse à atteindre est réduite comme dans les solutions de l'art antérieur mettant en oeuvre une poussée réduite.

La vitesse minimale de contrôle au sol étant réduite, il est possible de choisir une valeur de la vitesse critique V1' qui soit réduite. Ainsi, la distance parcourue par l'avion jusqu'à la position 201", ou il atteint sa vitesse critique V1' est plus courte, dans le mode de réalisation illustré par la figure 3, que dans les solutions de l'art antérieur illustrées par la figure 2, ce qui permet de réduire la distance ASD sans modifier la masse maximum au décollage MTOW. Sur la figure 4, la courbe 403 représente la masse maximum au décollage MTOW de l'avion, en fonction de la longueur de piste, quand la poussée des réacteurs est commandée selon le procédé de contrôle selon l'invention. Comme le montre cette courbe, l'utilisation d'un tel procédé de contrôle de la poussée des réacteurs permet d'augmenter la masse maximum au décollage MTOW, par rapport aux solutions utilisées dans l'art antérieur, quand la piste est relativement courte, ici inférieure à une longueur L2.

Selon un mode de réalisation possible, le dispositif de contrôle des réacteurs maintient la poussée des réacteurs à un niveau réduit par rapport à leur poussée nominale, pendant la suite de la procédure de décollage.

Selon un autre mode de réalisation particulièrement avantageux, qui est représenté par la figure 3, le dispositif de contrôle des réacteurs augmente de nouveau la poussée des réacteurs jusqu'à un niveau P3 quand l'avion atteint une vitesse V_{B} supérieure à la vitesse minimale de contrôle V_{MCG} associée à ce niveau de poussée P3 des réacteurs. Ce niveau de poussée P3 est supérieur au niveau P2 et peut être, dans le mode de réalisation représenté par la figure 3, égal au niveau de poussée P1 et préférentiellement égal au niveau nominal de poussée TO/GA. Ainsi, dans ce cas, la réduction de la poussée des réacteurs n'intervient que quand la vitesse de l'avion est proche de la vitesse critique V1. L'avion bénéficie dans ce cas, pendant la plus grande partie de la phase de décollage, de la poussée nominale TO/GA, et la vitesse de rotation V_{R} est atteinte à une position 202", sur une distance plus courte que quand la poussée est réduite pendant toute la phase de décollage.

Dans la description présentée ci-dessus, les réacteurs appliquent un niveau de poussée P1 constant depuis la position arrêtée de l'avion jusqu'à ce qu'il atteigne la vitesse prédéterminée V_{A}, et un niveau de poussée P2 constant au-dessus de cette vitesse prédéterminée V_{A} et jusqu'à atteindre une troisième vitesse prédéterminée V_{B}. Dans l'application réelle de ces modes de réalisation, il est cependant possible, sans sortir du cadre de l'invention, que le niveau de poussée varie légèrement autour de cette valeur P1, en dessous de la vitesse V_{A}, ou autour de la vitesse P2, au-dessus de la vitesse V_{B}.

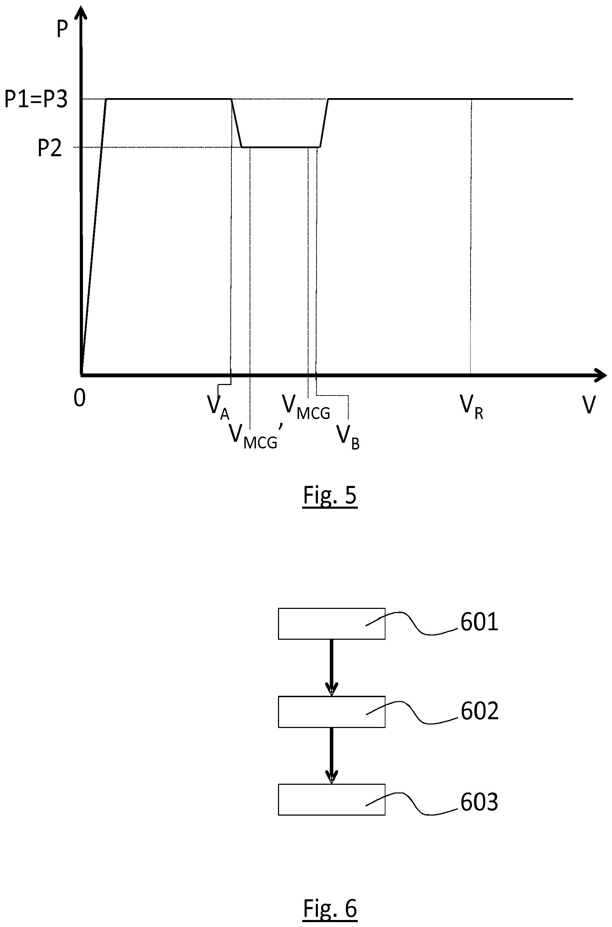

De plus, la transition entre deux niveaux de poussée des réacteurs, par exemple entre le niveau de poussée P1 et P2 est nécessairement progressive, la dynamique du réacteur ne permettant pas un changement instantanée. Ainsi, dans la pratique, le passage du niveau de poussée P1 au niveau P2 se fait progressivement en quelques secondes, entre le moment où l'avion atteint la vitesse V_{A} et le moment où il atteint la vitesse V_{MCG}' associée au niveau de poussée P2. De même, le passage du niveau de poussée P2 au niveau P3 se fait progressivement en quelques secondes, après le moment où l'avion atteint la vitesse V_{B}. Cette évolution du niveau de poussée est représentée schématiquement par la courbe de la figure 5, qui représente le niveau P de poussée des réacteurs en fonction de la vitesse V de l'avion, lors de la mise en oeuvre de ce procédé

La figure 6 représente les différentes étapes du procédé de contrôle de la poussée des réacteurs, dans le mode de réalisation représenté par la figure 3. Au cours d'une première étape 601 du procédé, le niveau de poussée est amené à la valeur P1, préférentiellement égale au niveau nominal de poussée TO/GA, pour faire accélérer l'avion jusqu'à la vitesse V_{A}. Quand l'avion atteint la vitesse V_{A} le niveau de poussée diminue, au cours de la seconde étape 602 du procédé, jusqu'à la valeur P2, avant que l'avion atteigne la vitesse V_{MCG}' associée à ce niveau de poussée P2. Quand la vitesse de l'avion a dépassé la vitesse V_{MCG} associée au niveau de poussée P3 (qui est ici égal à P1) et à atteint la vitesse V_{B}, le niveau de poussée P est augmenté jusqu'à la valeur P3, au cours de la troisième étape 603 du procédé. Comme indiqué précédemment, il est possible dans un autre mode de réalisation de l'invention de ne pas mettre en oeuvre cette troisième étape 603.

De façon préférentielle, pour obtenir une optimisation sensible de la masse maximum au décollage MTOW, le niveau de poussée P2 est compris entre 80% et 95% du niveau de poussée P1.

De façon avantageuse, le dispositif de contrôle de la poussée selon un mode de réalisation de l'invention est constitué par un calculateur embarqué dans l'avion, et apte à commander la puissance des réacteurs de l'avion. Ce dispositif comprend également un programme informatique mis en oeuvre par ce calculateur, et apte à commander la poussée des réacteurs de l'avion selon un procédé de contrôle selon un mode de réalisation de l'invention. Une commande adaptée dans le poste de pilotage permet au pilote de choisir s'il veut contrôler la poussée des réacteurs, pour le décollage, selon un procédé de contrôle selon un mode de réalisation de l'invention, ou avec selon un procédé de contrôle de l'art antérieur.

## Revendications

1. Procédé de contrôle de la poussée des réacteurs d'un avion multi-réacteurs (1), pendant la phase de décollage de l'avion, **caractérisé en ce qu'**il comprend les étapes successives suivantes :
- une première étape de commande des réacteurs à un premier niveau de poussée P1, jusqu'à ce que l'avion (1) atteigne une première vitesse prédéterminée V_{A} ;
- une seconde étape de commande des réacteurs à un second niveau de poussée P2, inférieur audit premier niveau de poussée P1, quand l'avion (1) présente une vitesse supérieure à la première vitesse prédéterminée V_{A} ;
ladite première vitesse prédéterminée V_{A} étant choisie inférieure à la vitesse minimale de contrôle au sol V_{MCG} dudit avion (1) quand les réacteurs (11, 12) sont au second niveau de poussée P2.

2. Procédé de contrôle selon la revendication 1, **caractérisé en ce qu'**il comprend une troisième étape de commande des réacteurs à un troisième niveau de poussée P3, supérieur au second niveau de poussée P2, quand l'avion (1) présente une vitesse supérieure à une seconde vitesse prédéterminée V_{B}, ladite seconde vitesse prédéterminée V_{B} étant choisie supérieure à la vitesse minimale de contrôle au sol V_{MCG} dudit avion (1) quand les réacteurs (11, 12) sont au troisième niveau de poussée P3.

3. Procédé de contrôle selon la revendication 2, **caractérisé en ce que** ledit troisième niveau de poussée P3 est égal audit premier niveau de poussée P1.

4. Procédé de contrôle selon l'une quelconque des revendications précédentes, **caractérisé en ce que** ledit premier niveau de poussée P1 est égal au niveau de poussée maximal pouvant être obtenu par le pilote.

5. Procédé de contrôle selon l'une quelconque des revendications précédentes **caractérisé en ce que** le niveau de poussée P2 est compris entre 80% et 95% du niveau de poussée P1.

6. Dispositif de contrôle de la poussée des réacteurs d'un avion multi-réacteurs (1), pendant la phase de décollage de l'avion, comprenant un calculateur embarqué dans l'avion et apte à commander le niveau de poussée des réacteurs de l'avion, **caractérisé en ce qu'**il comprend un programme informatique, mis en oeuvre par ledit calculateur, et apte à commander le niveau de poussée des réacteurs de l'avion selon le procédé de l'une quelconque des revendications 1 à 5.

7. Avion multi-réacteurs (1), **caractérisé en ce qu'**il comprend un dispositif selon la revendication 6.

## Patentansprüche

1. Verfahren zur Steuerung des Schubs der Triebwerke eines Flugzeugs mit mehreren Triebwerken (1) während der Startphase des Flugzeugs, **dadurch gekennzeichnet, dass** es die folgenden aufeinander folgenden Schritte umfasst:
- einen ersten Schritt der Steuerung der Triebwerke mit einem ersten Schubniveau P1, bis das Flugzeug (1) eine vorbestimmte erste Geschwindigkeit V_{A} erreicht;
- einen zweiten Schritt der Steuerung der Triebwerke mit einem zweiten Schubniveau P2, das niedriger als das erste Schubniveau P1 ist, wenn das Flugzeug (1) eine Geschwindigkeit aufweist, die höher als die vorbestimmte erste Geschwindigkeit V_{A} ist;
wobei die vorbestimmte erste Geschwindigkeit V_{A} niedriger gewählt wird als die Mindestkontrollgeschwindigkeit am Boden V_{MCG} des Flugzeugs (1), wenn die Triebwerke (11, 12) mit dem zweiten Schubniveau P2 arbeiten.

2. Verfahren zur Steuerung nach Anspruch 1, **dadurch gekennzeichnet, dass** es einen dritten Schritt der Steuerung der Triebwerke mit einem dritten Schubniveau P3, das höher als das zweite Schubniveau P2 ist, umfasst, wenn das Flugzeug (1) eine Geschwindigkeit aufweist, die höher als eine vorbestimmte zweite Geschwindigkeit V_{B} ist, wobei die vorbestimmte zweite Geschwindigkeit V_{B} höher gewählt wird als die Mindestkontrollgeschwindigkeit am Boden V_{MCG} des Flugzeugs (1), wenn die Triebwerke (11, 12) mit dem dritten Schubniveau P3 arbeiten.

3. Verfahren zur Steuerung nach Anspruch 2, **dadurch gekennzeichnet, dass** das dritte Schubniveau P3 gleich dem ersten Schubniveau P1 ist.

4. Verfahren zur Steuerung nach einem der vorhergehenden Ansprüche, **dadurch gekennzeichnet, dass** das erste Schubniveau P1 gleich dem maximalen Schubniveau ist, das von dem Piloten erreicht werden kann.

5. Verfahren zur Steuerung nach einem der vorhergehenden Ansprüche, **dadurch gekennzeichnet, dass** das Schubniveau P2 zwischen 80 % und 95 % des Schubniveaus P1 liegt.

6. Vorrichtung zur Steuerung des Schubs der Triebwerke eines Flugzeugs mit mehreren Triebwerken (1) während der Startphase des Flugzeugs, welche einen Rechner umfasst, der sich an Bord des Flugzeugs befindet und in der Lage ist, das Schubniveau der Triebwerke des Flugzeugs zu steuern, **dadurch gekennzeichnet, dass** sie ein Computerprogramm umfasst, das von dem Rechner ausgeführt wird und geeignet ist, das Schubniveau der Triebwerke des Flugzeugs gemäß dem Verfahren nach einem der Ansprüche 1 bis 5 zu steuern.

7. Flugzeug mit mehreren Triebwerken (1), **dadurch gekennzeichnet, dass** es eine Vorrichtung nach Anspruch 6 umfasst.

## Claims

1. Method of controlling the thrust of the jets of a multi-jet aircraft (1), during the aircraft takeoff phase, **characterized in that** it comprises the following successive steps:
- a first step of controlling the jets to a first thrust level P1, until the aircraft (1) reaches a first predetermined speed V_{A};
- a second step of controlling the jets to a second thrust level P2, less than said first thrust level P1, when the aircraft (1) exhibits a speed greater than the first predetermined speed V_{A};
said first predetermined speed V_{A} being chosen to be less than the minimum ground control speed V_{MCG} of said aircraft (1) when the jets (11, 12) are at the second thrust level P2.

2. Control method according to Claim 1, **characterized in that** it comprises a third step of controlling the jets to a third thrust level P3, greater than the second thrust level P2, when the aircraft (1) exhibits a speed greater than a second predetermined speed V_{B}, said second predetermined speed V_{B} being chosen to be greater than the minimum ground control speed V_{MCG} of said aircraft (1) when the jets (11, 12) are at the third thrust level P3.

3. Control method according to Claim 2, **characterized in that** said third thrust level P3 is equal to said first thrust level P1.

4. Control method according to any one of the preceding claims, **characterized in that** said first thrust level P1 is equal to the maximum thrust level that can be obtained by the pilot.

5. Control method according to any one of the preceding claims **characterized in that** the thrust level P2 lies between 80% and 95% of the thrust level P1.

6. Device for controlling the thrust of the jets of a multi-jet aircraft (1), during the aircraft takeoff phase, comprising a computer onboard the aircraft and able to control the thrust level of the jets of the aircraft, **characterized in that** it comprises a computational program, implemented by said computer, and able to control the thrust level of the jets of the aircraft according to the method of any one of Claims 1 to 5.

7. Multi-jet aircraft (1), **characterized in that** it comprises a device according to Claim 6.
